Europäisches Patentamt

(19) European Patent Office

Office européen des brevets

(11) Numéro de publication : **0 278 826 B1**

(12) **FASCICULE DE BREVET EUROPEEN**

(45) Date de publication du fascicule du brevet :
18.12.91 Bulletin 91/51

(51) Int. Cl.$^5$ : **G01D 5/26, G01K 11/16**

(21) Numéro de dépôt : 88400147.0

(22) Date de dépôt : 22.01.88

(54) **Dispositif à fibres optiques pour la détection à distance de l'état d'un paramètre physique par rapport à au moins une valeur déterminée.**

(30) Priorité : 23.01.87 FR 8700804

(43) Date de publication de la demande :
17.08.88 Bulletin 88/33

(45) Mention de la délivrance du brevet :
18.12.91 Bulletin 91/51

(84) Etats contractants désignés :
AT BE CH DE ES FR GB GR IT LI LU NL SE

(56) Documents cités :
EP-A- 0 146 522
DE-A- 3 405 132
GB-A- 1 540 907
PATENT ABSTRACTS OF JAPAN, vol. 7, no. 87
(P-190)[1232], 12 avril 1983; & JP-A-58 14 021
(CANON K.K.) 26-01-1983
ADVANCES IN INSTRUMENTATION, vol. 39,
partie 1, 22-25 octobre 1984, pages 315-330,
ISA Research Triangle Park, New York, US;
S.A. KINGSLEY: "Distributed fiber-optic sensors"

(56) Documents cités :
PATENT ABSTRACTS OF JAPAN, vol. 7, no.
224 (P-227)[1369], 5 octobre 1983; & JP-A-58
115 333 (TOYOTA JIDOSHA KOGYO K.K.) 09-
07-1983
APPLIED OPTICS, vol. 19, no. 17, 1 septembre
1980, pages 2917-2920, Optical Society of
America, New York, US; A.R. NELSON et al.:
"Passive multiplexing system for fiber-optic
sensors"
PATENT ABSTRACTS OF JAPAN, vol. 6, no. 22
(P-101)[900], 9 février 1982; & JP-A-56 143 934
(MORITETSUKUSU K.K.) 10-11-1981

(73) Titulaire : BERTIN & CIE
Zone Industrielle Boîte postale 3
F-78373 Plaisir Cédex (FR)

(72) Inventeur : Huard, Serge
Chemin du Vieux Moulin à Huile Saint Pierre
F-13400 Aubagne (FR)

(74) Mandataire : Ramey, Daniel
Cabinet Ores 6 Avenue de Messine
F-75008 Paris (FR)

## Description

L'invention concerne un dispositif à fibres optiques pour la détection à distance de l'état d'un paramètre physique, qui peut être par exemple la température, l'état ou la composition d'une substance, la présence d'un agent polluant dans une substance, etc..., par rapport à une ou plusieurs valeurs déterminées.

L'invention est basée sur la détection de la variation de la diffusion de la lumière par un élément sensible aux variations d'un paramètre physique, la variation de la diffusion de la lumière par cet élément étant brusque pour une valeur particulière ou un état particulier du paramètre physique.

On sait déjà que tous les cristaux liquides présentent une transition de phase nématique-isotrope pour une valeur particulière de la température, appelée température de clarification et qui est caractéristique de chaque cristal liquide. Dans sa phase nématique, le cristal liquide présente une turbidité apparente qui provient des fluctuations thermiques de l'alignement des molécules autour de leur position d'équilibre. Lorsque la température augmente, le cristal liquide effectue une transition de phase nématique-isotrope et devient alors sensiblement transparent, ce phénomène étant totalement réversible. Le taux de diffusion lumineuse du cristal liquide dans sa phase nématique est environ $10^6$ fois plus important que dans sa phase isotrope, et la largeur de la plage de transition est très faible, de l'ordre de 0,1°C. Ces cristaux liquides sont donc particulièrement adaptés à la fabrication de capteurs optiques du type tout ou rien pour la mesure d'une température.

Un phénomène semblable est constaté pour les substances de type paraffine, au voisinage de leur point du fusion. De nombreux auteurs ont décrit des montages de capteurs optiques fonctionnant sur ce principe et exploitant la variation brutale du coefficient de transmission de la lumière par la substance considérée, qui est sensiblement opaque en-dessous d'une température particulière et qui est sensiblement transparente au-dessus de cette température. On citera en particulier :

— D. RIVIERE, "capteur de température à fibre optique et à cristaux liquides", OPTO 85, pages 179 et 180, et HORIZON DE L'OPTIQUE 85, pages 20 et 21 ;

— S. HUARD, V. LANFANT "multiplexage de capteurs de température à fibres optiques et cristaux liquides", SEPTIEMES JOURNEES NATIONALES D'OPTIQUE GUIDEE, Nice 1986, pages 46 ;

— A. CHAKARI, N. DEMAGH, P. MEYRUIS "capteur de température à fibres optiques multimodes par effet de transition de phase et variation d'indice des matériaux de type paraffine", SEPTIEMES JOURNEES NATIONALES D'OPTIQUE GUIDEE, Nice 1986, pages 48.

Ces travaux sont basés sur la mesure de la variation du coefficient de transmission d'un cristal liquide ou d'une paraffine en fonction de la température et ne permettent donc pas la mesure de la température d'une très grande quantité de substance sensible ou l'association en série de plusieurs éléments sensibles caractérisés par des températures de transition différentes (par exemple en vue de la régulation d'un processus dans une plage donnée de températures de fonctionnement), sauf à associer des capteurs fonctionnant en transmission ou en réflexion à des coupleurs optiques en étoile, qui sont complexes, onéreux et pénalisant en flux.

Le document DE-A-3405132 décrit également un dispositif de mesure de températures dans lequel plusieurs éléments sensibles caractérisés par des températures de transition différentes sont agencés en parallèle et traversés par des flux lumineux qu'ils transmettent au moyen de fibres optiques à un ou plusieurs photorécepteurs. Du fait que les éléments sensibles ne peuvent être agencés en série, il en résulte une plus grande complexité du dispositif.

L'invention a notamment pour objet un dispositif pour la détection et la mesure à distance d'un paramètre physique, faisant application de la variation brusque du coefficient de diffusion de la lumière par un élément sensible tel par exemple qu'un cristal liquide ou une paraffine, et qui n'est soumis aux inconvénients précités des dispositifs connus.

L'invention propose à cet effet un dispositif à fibres optiques pour la détection à distance de l'état d'un paramètre physique tel par exemple que la température, l'état ou la composition d'une substance, par rapport à au moins une valeur prédéterminée de ce paramètre, ce dispositif comprenant une source de lumière pulsée délivrant des impulsions lumineuses de faible durée et de faible largeur spectrale transmises par une fibre optique d'émission à au moins un élément sensible dont le taux de transmission de la lumière varie brusquement en fonction du paramètre considéré pour former un capteur fonctionnant en tout ou rien, caractérisé en ce qu'il comprend :

— plusieurs éléments sensibles du type précité, reliés en série par la même fibre optique d'émission et présentant des variations brusques de leur taux de diffusion lumineuse pour des valeurs différentes croissantes du paramètre physique considéré,

— un élément de référence relié en série aux éléments sensibles par la fibre optique d'émission et situé à proximité d'un d'entre eux pour une ·mesure de la valeur instantanée du flux lumineux incident sur cet élément sensible,

— des moyens de mesure des flux lumineux diffusés par les éléments sensibles et l'élément de référence, ces moyens étant reliés à ces éléments par au moins une fibre optique de réception,

— et des moyens associés aux moyens de mesure pour séparer dans le temps les signaux correspondant aux flux lumineux diffusés par les éléments sensibles et l'élément de référence.

L'invention prévoit donc de mesurer les flux lumineux diffusés par les éléments sensibles, et non les flux lumineux qu'ils transmettent ou réfléchissent, ce qui permet d'agencer les éléments sensibles en série et de les relier par une même fibre optique. L'utilisation d'un élément de référence, en série avec les éléments sensibles, permet de réaliser un calibrage automatique des mesures sur les éléments sensibles, prenant en compte les fluctuations d'émission de la source lumineuse et les variations de transmission de la ligne optique.

Le dispositif selon l'invention peut utiliser des substances sensibles de différents types, pour la détection de paramètres physiques divers, tels que la température, l'état de polymérisation, la composition chimique, etc... d'une substance. Les cristaux liquides au voisinage de leur transition nématique-isotrope et les paraffines au voisinage de leur point de fusion sont particulièrement avantageux.

Des compositions différentes des cristaux liquides permettent d'obtenir des températures de clarification comprises entre 20 et 200°C environ. De même, dans le cas des paraffines, leur sélection par la longueur de leurs chaînes d'hydrocarbures saturés permet de disposer de températures de fusion très variées. Cette possibilité de choix est très importante, notamment pour les applications de l'invention au contrôle de processus industriels, dans lesquels les températures de consigne sont a priori quelconques.

Selon un mode de réalisation préféré de l'invention, la fibre optique d'émission est en partie confondue avec une fibre optique de réception et comprend un coupleur en Y dont les deux branches divergentes sont raccordées, respectivement, à la source de lumière et aux moyens de mesure, et dont la branche commune est raccordée à l'élément de référence et aux éléments sensibles par la partie commune de la fibre d'émission et de la fibre de réception.

Dans ce cas, chaque élément sensible peut comprendre deux tronçons alignés de fibre optique entre lesquels est délimité une cavité remplie de substance active. L'un de ces tronçons peut présenter une extrémité libre, qui est éventuellement pourvu d'un revêtement réfléchissant. Cette extrémité libre de fibre optique constitue alors en elle-même un élément de référence et permet, par analyse du signal réfléchi, d'opérer une distinction nette entre le passage du paramètre physique par sa valeur particulière correspondant à la variation brusque du taux de diffusion de l'élément sensible, et une rupture de la fibre optique, entre l'élément de référence et l'élément sensible.

Les éléments sensibles peuvent être groupés en cellules de mesure qui sont raccordées en parallèle à une même fibre optique d'émission et de réception.

L'invention sera mieux comprise et d'autres détails, caractéristiques et avantages de celle-ci apparaîtront au cours de la description explicative qui va suivre, faite à titre d'exemple en référence aux dessins annexés, dans lesquels :

— la figure 1 représente schématiquement des premiers moyens de mesure de température ;

— la figure 2 représente schématiquement la constitution d'un élément sensible ;

— la figure 3 représente les formes des signaux obtenus, respectivement, lorsque la température est inférieure ou supérieure à la température de transition d'un cristal liquide ;

— la figure 4 représente schématiquement une première forme de réalisation de l'invention, comprenant deux éléments sensibles montés en série ;

— la figure 5 représente les différentes formes des signaux fournis par le dispositif de la figure 4, en fonction des valeurs de la température ;

— la figure 6 représente une variante de réalisation de l'invention, comprenant (n + 1) éléments sensibles montés en série ;

— la figure 7 représente schématiquement une autre variante de réalisation de l'invention dans laquelle des cellules d'éléments sensibles sont montés en parallèle sur la fibre d'émission.

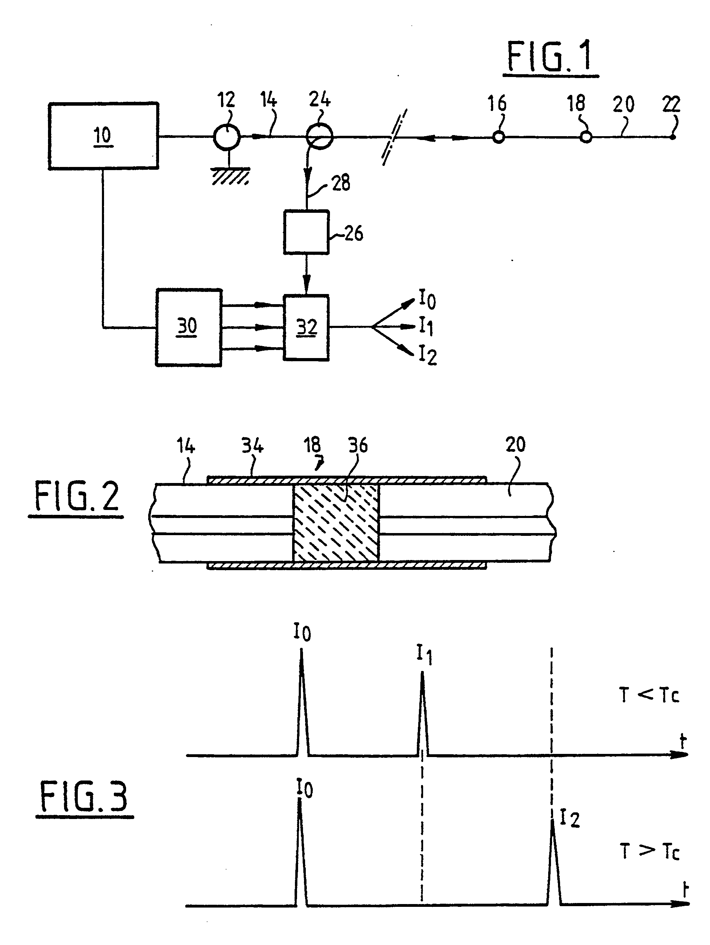

On se réfère d'abord aux figures 1 à 3, qui représentent des moyens de détection d'une valeur particulière de température au moyen d'un élément sensible à cristal liquide ou à paraffine.

Le dispositif représenté en figure 1 comprend un générateur d'impulsions 10, dont la sortie commande une source de lumière 12 émettant des impulsions lumineuses de faible durée et de faible largeur spectrale (quelques nanomètres), la source 12 étant par exemple constituée par un laser semi-conducteur.

Une fibre optique d'émission, désignée par la référence 14, relie la source 12 à un élément de référence 16, puis à un élément sensible 18 caractérisé par une variation brusque de son taux de diffusion de la lumière pour une valeur particulière de la température, l'élément sensible 18 étant lui-même raccordé, à l'opposé de la source de lumière 12, à une longueur de fibre optique 20 présentant une extrémité libre 22. La fibre optique d'émission 14 forme également une partie de la fibre optique de réception, les deux fibres étant différenciées l'une de l'autre par un coupleur en Y 24 entre la source de lumière 12 et l'élément de référence 16, les deux branches divergentes du coupleur 24 étant raccordées l'une à la source de lumière 12 par la fibre d'émission 14 et l'autre à un circuit 26 de mesure de flux lumineux par la fibre de réception 28, tandis que la branche commune du coupleur 24 est raccordée, par la partie commune des fibres d'émission et de réception, à l'élément de référence 16.

La sortie du générateur d'impulsions 10 est également reliée à l'entrée d'un circuit 30 générateur de retard variable, qui commande un circuit échantillonneur-bloqueur 32 monté sur la sortie des moyens de mesure 26 et permettant de distinguer dans le temps les signaux correspondant à l'élément de référence 16, à l'élément sensible 18 et à l'extrémité libre 22 de la fibre optique.

Un mode de réalisation de l'élément sensible 18 est représenté en figure 2. Dans cet exemple, l'élément sensible 18 comprend un tube 34 en une matière telle que du verre ou du métal, qui réunit les extrémités alignées des deux fibres optiques 14 et 20 en ménageant entre elles une cavité remplie d'un cristal liquide 36. Le tube 34 peut être rendu solidaire des fibres 14 et 20 par fusion locale ou par collage.

L'élément de référence 16 est par exemple constitué par un connecteur optique fixe ou amovible ou par une épissure entre les extrémités alignées de deux tronçons de fibres optiques, et peut encore avoir une constitution semblable à celle de l'élément sensible 18 représenté en figure 2, mais sans comprendre de cristal liquide 36 entre les extrémités alignées des deux fibres optiques.

L'extrémité libre 22 de la fibre optique terminale peut être laissée telle quelle, ou bien peut subir un traitement réfléchissant.

Les fibres optiques 14, 20 et 28 sont avantageusement des fibres multimodes, à saut d'indice ou à gradient d'indice.

L'indice de réfraction de l'élément sensible est de préférence sensiblement égal à celui des fibres optiques.

Le fonctionnement de ce dispositif va maintenant être décrit en référence à la figure 3.

La source de lumière 12, sous commande du générateur 10 émet des impulsions lumineuses de faible durée et de faible largeur spectrale qui sont transmises par la fibre optique 14 et l'élément de référence 16 jusqu'à l'élément sensible 18. L'élément de référence 16 permet, par réflexion sur une interface fibre optique-air (cas d'un connecteur optique) ou par rétro-diffusion et réflexion (cas d'une épissure), une mesure locale de la valeur instantanée du flux lumineux incident sur l'élément sensible 18, le flux lumineux réfléchi ou rétro-diffusé par l'élément de référence 16 étant mesuré par les moyens 26 qui fournissent en sortie un signal correspondant $I_0$.

Lorsque la température de l'élément sensible est inférieure à la température de clarification du cristal liquide 36, celui-ci peut être considéré comme sensiblement opaque avec un taux élevé de rétro-diffusion de la lumière. Le flux lumineux rétro-diffusé par le cristal liquide 36 est mesuré par les moyens 26, qui fournissent en sortie un signal correspondant $I_1$.

Lorsque la température est supérieure à la température de clarification du cristal liquide 36, celui-ce devient sensiblement transparent et présente un taux de rétro-diffusion relativement très faible et d'autant plus faible que la différence entre les indices de réfraction de l'élément sensible et de la fibre optique est elle-même faible. Le signal correspondant fourni par les moyens de mesure 26 sera donc négligeable. Le flux lumineux traversant le cristal liquide 36 est réfléchi par l'extrémité libre 22 de la fibre optique terminale 20. Ce flux lumineux réfléchi est mesuré par les moyens 26, qui fournissent en sortie un signal correspondant $I_2$.

Le générateur d'impulsions 10 permet de synchroniser l'émission des impulsions lumineuses et les détections des signaux $I_0$, $I_1$ et $I_2$, le retard introduit par le générateur 30 étant égal au temps total de propagation d'une impulsion lumineuse sur le trajet source de lumière 12 — élément de référence 16 — moyens de mesure 26.

Pour homogénéiser et faciliter la détection des signaux, on prévoit avantageusement que les longueurs de fibre optique entre l'élément de référence 16 et l'élément sensible 18, et entre l'élément sensible 18 et l'extrémité libre 22 de la fibre optique terminale 20, seront égales à une valeur commune l, vérifiant la relation :

$$nl/c \geqq t0$$

où t0 est la durée de l'impulsion lumineuse délivrée par la source 12, n est l'indice de groupe de la fibre à la longueur d'onde centrale d'émission de la source 12, est c est la vitesse de la lumière dans le vide. Si t0 est égal à 10 nanosecondes, l a une valeur égale ou supérieure à 2 mètres.

Le choix de cette longueur calibrée l pour les fibres optiques reliant les éléments 16, 18 et 22 permet d'assurer l'interchangeabilité des éléments sensibles et des éléments de référence par rapport aux moyens de mesure 26. Par contre, toute modification de la longueur de fibre optique entre le coupleur 24 et l'élément de référence 16 devra se traduire par une modification proportionnelle du retard introduit par le générateur 30.

La figure 3 représente schématiquement les résultats obtenus :
lorsque la température T est inférieure à la température Tc de clarification du cristal liquide 36, le rapport $I_1/I_0$ est supérieur au rapport $I_2/I_0$, $I_2$ étant alors sensiblement négligeable. Quand la température T est supérieure à la température de clarification Tc, le rapport $I_1/I_0$ est inférieur au rapport $I_2/I_0$ (le signal $I_1$ étant alors totalement négligeable du fait que l'indice de réfraction du cristal liquide est sensiblement équivalent à celui de la fibre optique).

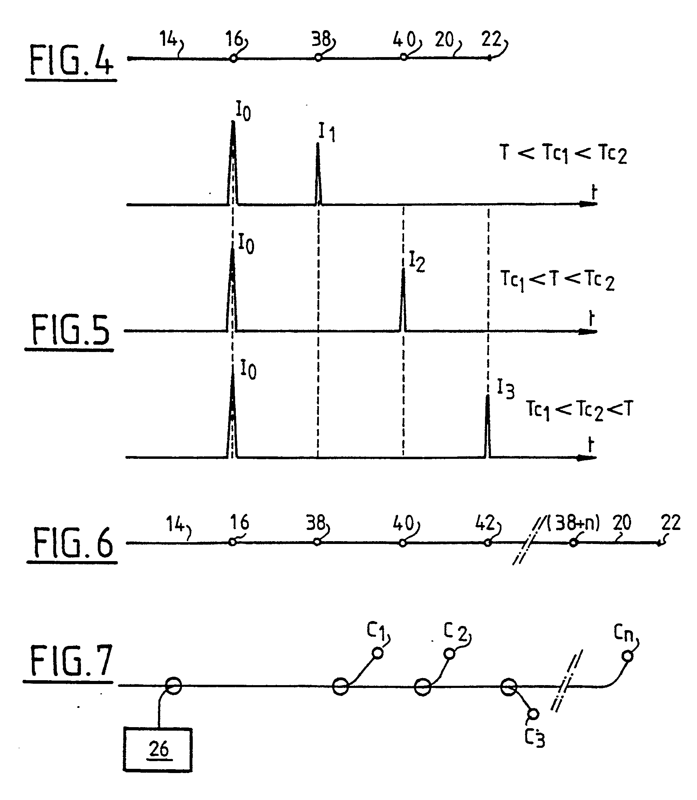

En figure 4, on a représenté schématiquement un dispositif dans lequel l'élément de référence 16 monté sur la fibre optique 14 est suivi par deux éléments sensibles 38 et 40 et par une longueur de fibre optique terminale 20 à extrémité libre 22. Les éléments sensibles 38 et 40 sont caractérisés par des températures de clarification $Tc_1$ et $Tc_2$ différentes, la température de clarification $Tc_1$ de l'élément sensible 38 le plus proche de l'élément de référence 16 étant inférieure à la température de clarification $Tc_2$ de l'autre élément sensible 40. On obtient alors, en fonction des variations de la température les résultats représentés schématiquement en figure 5 où $I_0$, $I_1$, $I_2$, $I_3$ désignent respectivement les signaux de mesure correspondant à l'élément de référence 16, au premier élément sensible 38, au second élément sensible 40 et à l'extrémité libre 22 de la fibre optique terminale 20.

Quant T est inférieur à $Tc_1$, le rapport $I_1/I_0$ est supérieur au rapport $I_2/I_0$ et au rapport $I_3/I_0$.

Quand T est comprise entre $Tc_1$ et $Tc_2$, le rapport $I_2/I_0$ est supérieur à $I_1/I_0$ et au rapport $I_3/I_0$.

Quand la température T est supérieure à $Tc_2$, le rapport $I_3/I_0$ est supérieur au rapport $I_1/I_0$ et au rapport $I_2/I_0$.

Les rapports $I_1/I_0$, $I_2/I_0$, $I_3/I_0$ peuvent donc avoir une valeur haute, désignée symboliquement par le chiffre 1 et une valeur basse, désignée symboliquement par le chiffre 0, en fonction des valeurs de la température. Les résultats de mesure peuvent alors être présentés comme suit :

— pour $T < Tc_1$, on obtient la combinaison 100 ;
— pour T compris entre $Tc_1$ et $Tc_2$, on obtient la combinaison 010 ;
— pour $T > Tc_2$, on obtient la combinaison 001.

La figure 6 représente la généralisation de ce dispositif au cas de (n + 1) éléments sensibles montés en série sur la fibre optique 14 entre l'élément de référence 16 et la fibre optique terminale 20 d'extrémité libre 22. Les différents éléments sensibles 38, 40, 42..., 38 + n comprennent par exemple des cristaux liquides ayant des températures de clarification progressivement croissantes. La disposition en série de ces n + 1 éléments sensibles est rendue possible par l'emploi d'une fibre optique unique de jonction entre les différents capteurs, ce qui se traduit par l'absence de dérivations permanentes et par un faible niveau de pertes caractérisant la transmission de chaque élément sensible dans sa phase isotrope.

L'invention présente, de façon générale, l'avantage de permettre aisément le multiplexage de plusieurs cellules de mesure C1, C2, C3,..., Cn, chaque cellule de mesure pouvant comprendre un ou plusieurs éléments sensibles. La même source de lumière et les mêmes moyens de mesure 26 sont couplés aux différentes cellules de mesure par différentes fibres optiques ayant une partie commune servant non seulement à l'émission, mais également à la réception, comme on le voit en figure 7. Dans cette forme de réalisation, la sélection dans le temps des différents signaux reçus par les moyens de mesure 26 est possible lorsque les différentes longueurs de fibre employées permettent de séparer dans le temps les informations fournies par les différentes cellules de mesure C1, C2, C3,..., Cn.

## Revendications

1. Dispositif à fibres optiques pour la détection à distance de l'état d'un paramètre physique tel par exemple que la température, l'état ou la composition d'une substance, par rapport à au moins une valeur prédéterminée de ce paramètre, ce dispositif comprenant une source de lumière pulsée (10, 12) délivrant des impulsions lumineuses de faible durée et de faible largeur spectrale transmises par une fibre optique d'émission (14) à au moins un élément sensible (18) dont le taux de transmission de la lumière varie brusquement en fonction du paramètre considéré pour former un capteur fonctionnant en tout ou rien, caractérisé en ce qu'il comprend :

— plusieurs éléments sensibles (38, 40, 42,...) du type précité, reliés en série par la même fibre optique d'émission (14) et présentant des variations brusques de leur taux de diffusion lumineuse pour des valeurs différentes croissantes du paramètre physique considéré,

— un élément de référence (16) relié en série aux éléments sensibles par la fibre optique d'émission (14) et situé à proximité d'un d'entre eux pour une mesure de la valeur instantanée du flux lumineux incident sur cet élément sensible,

— des moyens (26) de mesure des flux lumineux diffusés par les éléments sensibles et l'élément de référence, ces moyens étant reliés à ces éléments par au moins une fibre optique (28) de réception,

— et des moyens (30, 32) associés aux moyens de mesure pour séparer dans le temps les signaux correspondant aux flux lumineux diffusés par les éléments sensibles et l'élément de référence.

2. Dispositif selon la revendication 1, caractérisé en ce que chaque élément sensible (38, 40, 42) comprend une substance active (36) dont le taux de diffusion lumineuse varie de façon brusque par changement de phase entre deux paliers de valeurs stables pour une valeur particulière du paramètre considéré, la substance active (36) étant un cristal liquide au voisinage de sa transition de phase nématique-isotrope, ou une paraffine au voisinage de son point de fusion, le paramètre considéré étant alors la température.

3. Dispositif selon la revendication 2, caractérisé en ce que chaque élément sensible comprend deux tronçons alignés de fibre optique (14, 20) entre lesquels est délimitée une cavité remplie de la substance active (36).

4. Dispositif selon la revendication 3, caractérisé en ce que l'un des tronçons de fibre optique fait partie de la fibre optique d'émission (14) et l'autre tronçon (20) présente une extrémité libre (22) opposée à son extrémité raccordée à ladite cavité, cette extrémité libre (22) étant pourvue d'un revêtement réfléchissant.

5. Dispositif selon l'une des revendications précédentes, caractérisé en ce que l'indice de réfraction de chaque élément sensible (38, 40, 42,...) est sensiblement égal à celui des fibres optiques.

6. Dispositif selon l'une des revendications précédentes, caractérisé en ce que l'élément de référence (16) est constitué par un connecteur de fibre optique monté fixe ou amovible sur la fibre optique d'émission (14) entre la source de lumière (12) et l'élément sensible voisin.

7. Dispositif selon l'une des revendications 1 à 5, caractérisé en ce que l'élément de référence est constitué par une épissure entre deux fibres optiques alignées.

8. Dispositif selon l'une des revendications précédentes, caractérisé en ce que la fibre optique d'émission (14) est en partie confondue avec la fibre optique de réception et comprend un coupleur en Y (24) dont les deux branches divergentes sont raccordées respectivement à la source de lumière (12) et aux moyens de mesure (26) et dont la branche commune est raccordée à l'élément de référence (16) et aux éléments sensibles (38, 40, 42...) par la partie commune de la fibre d'émission et de la fibre de réception.

9. Dispositif selon l'une des revendications précédentes, caractérisé en ce qu'il comprend un générateur d'impulsions (10) relié à la source de lumière (12) et à un générateur de retard variable (30), dont la sortie est reliée à un circuit (32) échantillonneur-bloqueur associé aux moyens de mesure (26).

10. Dispositif selon l'une des revendications précédentes, caractérisé en ce que les longueurs de liaison à fibre optique entre l'élément de référence (16) et les éléments sensibles (38, 40, 42,...) sont prédéterminées et calculées de façon à permettre ou faciliter la séparation dans le temps des différents signaux reçus de ces éléments par les moyens de mesure.

11. Dispositif selon l'une des revendications 1 à 10, caractérisé en ce que les éléments sensibles sont groupés en cellules de mesure (C1, C2, C3,..., Cn) raccordées en parallèle à une même fibre d'émission et de réception.

## Claims

1. An optical fiber device for remotely detecting the state of a physical parameter, for example such as temperature, or the state or the composition of a substance, relative to at least one predetermined value of said parameter, the device comprising a pulse light source (10, 12) delivering light pulses of short duration and narrow spectrum width, the pulses being transmitted by a send optical fiber (14) to at least one sensitive element (18) whose light transmission factor changes suddenly as a function of the parameter under consideration, thereby forming a sensor with on/off operation, the device being characterized in that it comprises :

a plurality of sensitive elements (38, 40, 42,...) of the above-mentioned type connected in series by a single send optical fiber (14) and presenting sudden changes in their light diffusion factors for increasing different values of the physical parameter under consideration ;

a reference element (16) connected in series with the sensitive elements by the send optical fiber (14) and situated close to one of them to provide a measurement of the instantaneous value of the light flux incident on said sensitive element ;

measurement means (26) for measuring the light flux diffused by the sensitive elements and by the reference element, said means being connected to said elements by at least one receive optical fiber (28) ; and

means (30, 32) associated with the measurement means for separating as a function of time the signals corresponding to the light flux as diffused by the reference element and by the sensitive elements.

2. A device according to claim 1, characterized in that each sensitive element (38, 40, 42) comprises an active substance (36) whose light diffusion factor varies suddenly by a change of phase between two stable value levels for a particular value of the parameter under consideration, the active substance (36) being a liquid crystal close to its nematic-isotropic phase transition, or a paraffin in the vicinity of its melting point, the parameter under consideration then being temperature.

3. A device according to claim 2, characterized in that each sensitive element comprises two aligned lengths of optical fiber (14, 20) delimiting a cavity therebetween which is filled with the active substance (36).

4. A device according to claim 3, characterized in that one of the lengths of optical fiber forms a portion of the send optical fiber (14) while the other length (20) has a free end (22) distant from its end connected to said cavity, said free end (22) being provided with a reflective coating.

5. A device according to any preceding claim, characterized in that the refractive index of each sensitive element (38, 40, 42,...) is substantially equal to that of the optical fibers.

6. A device according to any preceding claim, characterized in that the reference element (16) is constituted by an optical fiber connector permanently or removably mounted in the send optical fiber (14) between the light source (12) and the adjacent sensitive element.

7. A device according to any one of claims 1 to 5, characterized in that the reference element is constituted by a splice between two optical fibers in alignment.

8. A device according to any preceding claim, characterized in that the send optical fiber (14) coincides in part with the receive optical fiber and includes a Y-coupler (24) whose two diverging branches are connected respectively to the light source (12) and to the measurement means (26), and whose common branch is connected to the reference element (16) and to the sensitive elements (38, 40, 42,...) by the common portion of the send fiber and of the received fiber.

9. A device according to any preceding claim, characterized in that it includes a pulse generator (10) connected to the light source (12) and to a variable delay generator (30), with the output thereof being connected to a sample-and-hold circuit (32) associated with the measurement means (26).

10. A device according to any preceding claim, characterized in that the lengths of connecting optical fiber between the reference element (16) and the sensitive elements (38, 40, 42, ...) are predetermined and are designed to make it possible or to facilitate separating as a function of time the various signals received from these elements by the measurement means.

11. A device according to any one of claims 1 to 10, characterized in that the sensitive elements are grouped together in measurement cells (C1, C2, C3,..., Cn) which are connected in parallel to a single send and receive fiber.

**Patentansprüche**

1. Vorrichtung mit Lichtleitfasern zum Fernerfassen des Zustands eines physikalischen Parameters, wie beispielsweise der Temperatur, des Zustands oder der Zusammensetzung einer Substanz, in Bezug auf zumindest einen vorbestimmten Wert dieses Parameters, wobei diese Vorrichtung eine gepulste Lichtquelle (10, 12) aufweist, die Lichtimpulse kleiner Dauer und kleiner Spektralbreite liefert, die über eine Emissionslichtleitfaser (14) zu zumindest einem empfindlichen Element (18) übertragen werden, dessen Transmissionsgrad für das Licht sich in Abhängigkeit von dem betrachteten Parameter abrupt ändert, um einen Sensor zu bilden, der in einem Ein/Aus-Modus arbeitet, dadurch gekennzeichnet, daß sie aufweist :

mehrere empfindliche Elemente (38, 40, 42,...) der vorgenannten Art, die über dieselbe Emissionslichtleitfaser (14) in Reihe verbunden sind und abrupte Änderungen über Lichtstreuraten für verschiedene zunehmende Werte des betrachteten physikalischen Parameters aufweisen, ein Referenzelement (16), das mit den empfindlichen Elementen über die Emissionslichtleitfaser (14) in Reihe verbunden ist und in der Nähe eines von ihnen gelegen ist, für eine Messung des Momentanwerts des einfallenden Lichtstroms auf dieses empfindliche Element,

Mittel (26) zum Messen der von den empfindlichen Elementen und dem Referenzelement gestreuten Lichtströme, wobei diese Mittel mit diesen Elementen über zumindest eine Empfangslichtleitfaser (28) verbunden sind,

und Mittel (30, 32), die mit den Mitteln zum Messen verbunden sind, um die Signale zeitlich zu trennen, welche den gestreuten Lichtströmen von den empfindlichen Elementen und dem Referenzelement entsprechen.

2. Vorrichtung nach Anspruch 1, dadurch gekennzeichnet, daß jedes empfindliche Element (38, 40, 42) eine aktive Substanz (36) aufweist, deren Lichtstreurate sich durch eine Phasenänderung zwischen zwei Stufen für stabile Werte für einen speziellen Wert des betrachteten Parameters auf abrupte Weise ändert, wobei die aktive Substanz (36) ein Flüssigkristall in der Umgebung seines Nematisch-Isotrop-Phasenübergangs- oder ein Paraffin in der Umgebung seines Schmelzpunkts ist und der betrachtete Parameter, dann die Temperatur ist.

3. Vorrichtung nach Anspruch 2, dadurch gekennzeichnet, daß jedes empfindliche Element zwei ausgerichtete Lichtleitfaserabschnitte (14, 20) aufweist, zwischen denen ein mit der aktiven Substanz (36) gefüllter Hohlraum abgegrenzt ist.

4. Vorrichtung nach Anspruch 3, dadurch gekennzeichnet, daß einer der Lichtleitfaserabschnitte der Emissions-leichtleitfaser (14) angehört und der andere Abschnitt (20) ein freies, seinem an den Hohlraum angeschlossenen Ende gegenüberliegendes Ende (22) aufweist, wobei dieses freie Ende (22) mit einem reflektierenden Belag versehen ist.

5. Vorrichtung nach einem der vorgehenden Ansprüche, dadurch gekennzeichnet, daß der Brechungsindex jedes empfindlichen Elements (38, 40, 42,...) im wesentlichen gleich jenem der Lichtleitfaser ist.

6. Vorrichtung nach einem der vorgehenden Ansprüche, dadurch gekennzeichnet, daß das Referenzmittel (16) aus einem Lichtleitfaserverbinder besteht, der fest oder lösbar an der Emissionslichtleitfaser (14) zwischen der Lichtquelle (12) und dem benachbarten empfindlichen Element angebracht ist.

7. Vorrichtung nach einem der vorgehenden Ansprüche 1 bis 5, dadurch gekennzeichnet, daß das Referenzelement aus einer Spleißung zwischen zwei ausgerichteten Lichtleitfasern besteht.

8. Vorrichtung nach einem der vorgehenden Ansprüche, dadurch gekennzeichnet, daß die Emissionslichtleitfaser (14) teilweise mit der Empfangslichtleitfaser zusammenfällt und einen Y-Koppler (24) aufweist, dessen zwei auseinandergehende Zweige mit der Lichtquelle (12) bzw. mit den Mitteln (26) zum Messen verbunden sind und dessen gemeinsamer Zweig mit dem Referenzelement (16) und mit den empfindlichen Elementen (38, 40, 42,...) über den gemeinsamen Teil der Emissionslichtleitfaser und der Empfangslichtleitfaser verbunden ist.

9. Vorrichtung nach einem der vorgehenden Ansprüche, dadurch gekennzeichnet, daß sie einen Impulsgenerator (10) aufweist, der mit der Lichtquelle (12) und mit einem Generator (30) für eine veränderliche Verzögerung verbunden ist, dessen Ausgang mit einer mit den Mitteln (26) zum Messen verbundenen Abtast-Halte-Schaltung (32) verbunden ist.

10. Vorrichtung nach einem der vorgehenden Ansprüche, dadurch gekennzeichnet, daß die Längen für eine Lichtleitfaserverbindung zwischen dem Referenzelement (16) und den empfindlichen Elementen (38, 40, 42,...) so vorbestimmt und berechnet sind, daß die zeitliche Trennung der verschiedenen Signale ermöglicht oder erleichtert wird, die von diesen Elementen von den Mitteln zum Messen erhalten werden.

11. Vorrichtung nach einem der Ansprüche 1 bis 10, dadurch gekennzeichnet, daß die empfindlichen Elemente in Meßzellen (C1, C2, C3,..., Cn) gruppiert sind, die parallel mit einer gemeinsamen Emissions- und Empfangslichtleiterfaser verbunden sind.

FIG.1

FIG.2

FIG.3

$T < T_c$

$T > T_c$

FIG.4 ___ 14 16 38 40 20 22

$I_0$

$I_1$

$T < Tc_1 < Tc_2$

$t$

$I_0$

$I_2$

$Tc_1 < T < Tc_2$

FIG.5 ___

$t$

$I_0$

$I_3$ $Tc_1 < Tc_2 < T$

$t$

FIG.6 ___ 14 16 38 40 42 //(38+n) 20 22

FIG.7 ___

$C_1$ $C_2$ $C_n$

$C_3$

26